# EUROPÄISCHE PATENTSCHRIFT

(11) **EP 4 146 963 B1**
(45) Veröffentlichungstag und Bekanntmachung des Hinweises auf die Patenterteilung: **02.10.2024**
(21) Anmeldenummer: 20727932.4
(22) Anmeldetag: 08.05.2020
(51) Int. Cl.: F16K 17/196, F16K 1/44, F16K 1/52, F16K 15/18, F16K 24/00, F16K 31/06

(54) **KRAFTSTOFFDAMPFSCHALT- UND -LÜFTUNGSVENTIL FÜR EINE VERBRENNUNGSKRAFTMASCHINE**
FUEL VAPOR SWITCH AND VENTILATION VALVE FOR AN INTERNAL COMBUSTION ENGINE
COMMUTATEUR À VAPEUR DE CARBURANT ET SOUPAPE DE VENTILATION POUR UN MOTEUR À COMBUSTION INTERNE

(43) Veröffentlichungstag der Anmeldung: 15.03.2023
(73) Patentinhaber: Pierburg GmbH, 41460 Neuss (DE)
(72) Erfinder: WAGNER, Juri, 41460 Neuss (DE); MONDORF, Christoph, 41460 Neuss (DE)
(74) Vertreter: terpatent PartGmbB
(86) Internationale Anmeldenummer: PCT/EP2020/062932
(87) Internationale Veröffentlichungsnummer: WO 2021/223889

(56) Entgegenhaltungen:
- DE-A1- 102010 044 336
- US-A- 3 414 232
- US-A1- 2014 034 859
- US-A1- 2018 119 650
- US-B2- 6 651 953

## Beschreibung

Die Erfindung betrifft ein Kraftstoffdampfschalt- und -lüftungsventil für eine Verbrennungskraftmaschine mit einem Elektromagneten, einem ersten Anschluss und einem zweiten Anschluss, einem Ventilkörper, der mit einem Anker des Elektromagneten gekoppelt ist und eine erste Auflagefläche aufweist, mit der der Ventilkörper auf einen ersten Ventilsitz absenkbar und vom ersten Ventilsitz abhebbar ist, der zwischen dem ersten Anschluss und dem zweiten Anschluss angeordnet ist, und eine zweite Auflagefläche aufweist, mit der der Ventilkörper gegen einen zweiten Ventilsitz bewegbar ist, der axial verschiebbar ist und über eine Feder in Richtung zum Ventilkörper belastet ist.

Kraftstoffdampfschalt- und -lüftungsventile dienen als Abschalt- und Entlastungsventile und werden fluidtechnisch zwischen dem Kraftstofftank eines Fahrzeugs und einem Aktivkohlefilter, der zur Absorption von Kraftstoffdämpfen dient, angeordnet, durch die Druckschwankungen im Kraftstofftank ausgeglichen werden sollen. Bei einem entstehenden Überdruck oder Unterdruck im Tank soll der Druck durch eine mechanische Bypassfunktion im Fall des Überdrucks durch Entlüftung zum Aktivkohlefilter abgebaut und im Fall des Unterdrucks durch Belüftung der Unterdruck im Tank begrenzt beziehungsweise ausgeglichen werden.

Zusätzlich muss es aus Sicherheitsgründen ermöglicht werden, das Ventil aktiv zu betätigen, um bei Fehlern im Bereich der Tankdruckregelung, den Pfad zwischen Kraftstofftank und Aktivkohlebehälter öffnen zu können, um ein implodieren oder explodieren zu vermeiden.

So muss das Kraftstoffdampfschalt- und -lüftungsventil beispielsweise unmittelbar vor und während des Tankvorgangs geöffnet werden, um einerseits sicherzustellen, dass beim Öffnen des Tankdeckels keine Kraftstoffdämpfe durch Überdruck zum Nutzer gelangen und anderseits kein erhöhter Druckaufbau während des Tankens im Tank erfolgt.

Es sind verschiedene Ventile bekannt geworden, die eine oder mehrere dieser Funktionen vereinen. So wird in der DE 10 2010 044 336 A1 eine Ventilanordnung beschrieben, bei dem ein Schaltventil mittels eines Elektromagneten betätigt werden kann, um eine Verbindung zwischen dem Tank und dem Aktivkohlefilter herzustellen. Der Ventilkörper dieses Ventils weist eine zweite Auflagefläche auf, mit der der Ventilkörper gegen den Regelkörper eines Überdruckventils anliegt, welches federbelastet gegen den Ventilkörper anliegt und so einen zentralen Durchlass im Ventilkörper verschließt, solange kein Überdruck im Tank herrscht. Des Weiteren kann bei einem Unterdruck im Tank der Ventilkörper gegen ein Federelement vom Sitz bewegt werden, so dass eine Belüftung des Tanks erfolgt. Entsprechend kann mit nur einem Ventil eine aktive Zu- und Abschaltung einer fluidischen Verbindung zwischen dem Tank und dem Aktivkohlefilter hergestellt werden und zusätzlich bei definierten Schaltpunkten eine Be- oder Entlüftung bei zu hohen Über- oder Unterdrücken hergestellt werden.

Des Weiteren ist aus der US 6 651 953 B2 ein Tankventil bekannt, bei dem ein erster Ventilkörper fest an einer Ventilstange befestigt ist, welche über einen Elektromagneten betätigt wird und ein zweiter Ventilkörper beweglich auf der Ventilstange angeordnet ist. An diesem zweiten Ventilkörper sind zwei Auflageflächen ausgebildet, wobei die erste Auflagefläche gegen das Gehäuse zum Verschließen des Durchströmungsquerschnitts verschiebbar ist und der erste Ventilkörper gegen die zweite Auflagefläche verschiebbar ist. Ein Druckausgleich in beide Richtungen oder eine druckabhängige Durchflussbegrenzung wird mit diesem Ventil nicht erreicht.

Es hat sich jedoch herausgestellt, dass es des Weiteren notwendig ist, den Gesamtdurchfluss des Ventils zu begrenzen, da der Aktivkohlefilter nur ein begrenztes Aufnahmevermögen pro Zeiteinheit aufweist. Hierdurch kann auch die Größe des Aktivkohlefilters durch Reduzierung des Maximaldurchflusses durch das Ventil verringert werden.

Es stellt sich daher die Aufgabe, ein Kraftstoffdampfschalt- und -lüftungsventil bereit zu stellen, mit dem zusätzlich zu einer aktiven und passiven Be- und Entlüftung des Tanks auch der Gesamtfluss zum Aktivkohlefilter zuverlässig begrenzt werden kann, ohne dass ein zusätzliches Ventil benötigt wird oder ein erhöhter Bauraumbedarf besteht. Entsprechend ist ein Durchfluss in Abhängigkeit des anliegenden Differenzdruckes zu gewährleisten.

Diese Aufgabe wird durch ein Kraftstoffdampfschalt- und -lüftungsventil für eine Verbrennungskraftmaschine mit den Merkmalen des Hauptanspruchs 1 gelöst.

Dadurch, dass der zweite Ventilsitz an einem Durchflussbegrenzungselement angeordnet ist, welches bei steigendem Überdruck am ersten Anschluss einen sich verringernden Durchströmungsquerschnitt zur Verfügung stellt, wird eine Durchflussbegrenzung gewährleistet, ohne zusätzliche Bauteile verwenden zu müssen. Stattdessen wird der Regelkörper, mit dem auch die passive Überdruckfunktion gewährleistet wird, gleichzeitig auch zur Begrenzung des Durchflusses verwendet, so dass weder ein erhöhter Bauraumbedarf besteht noch eine erhöhte Anzahl an Bauteilen verwendet werden muss. Die Überdruckfunktion erfolgt durch Einwirken eines Drucks aus dem Tank auf eine Fläche des Durchflussbegrenzungselementes innerhalb des zweiten Ventilsitzes, von dem das Durchflussbegrenzungselement entsprechend abgehoben wird, sobald die Kraft aufgrund der Druckdifferenz die Kraft der Feder übersteigt. Des Weiteren wird vom Ventilkörper neben der aktiven Zu- und Abschaltung auch die passive Unterdruckfunktion gewährleistet, da bei auftretendem Unterdruck im Tank die Druckdifferenz am Ventilkörper öffnend wirkt, so dass bei Überschreiten einer Federkraft eines auf den Ventilkörper wirkenden Federelementes durch die resultierende Kraft aufgrund der Druckdifferenz der Ventilkörper vom ersten Ventilsitz abgehoben wird, so dass eine Belüftung des Tanks erfolgt.

Vorzugsweise weist das Durchflussbegrenzungselement einen Regelkörper auf, der in eine Düse bewegbar ist, die in einem Strömungsgehäuseteil des zweiten Anschlusses angeordnet ist, wobei die Feder das Durchflussbegrenzungselement in einer aus der Düse heraus weisenden Richtung belastet. Durch die Verwendung der Düse wird die zur Durchströmung zur Verfügung stehende Fläche in Abhängigkeit der anliegenden Druckdifferenz geändert, so dass bei größerer Druckdifferenz eine geringere Durchströmungsfläche zur Verfügung steht, wodurch der zum Aktivkohlefilter gelangende Volumenstrom auch bei hohen Druckdifferenzen begrenzt wird.

Die Wirkung einer Vergleichmäßigung des Durchflusses zum Aktivkohlefilter kann noch verstärkt werden, wenn das Durchflussbegrenzungselement eine sphärisch oder kegelig geformte Umströmungsfläche aufweist, die gegenüberliegend zu einer Innenfläche der Düse angeordnet ist. So kann ein beinahe konstanter Durchfluss für verschiedene Druckdifferenzen erzielt werden.

Des Weiteren ist es vorteilhaft, wenn am Durchflussbegrenzungselement ein radial äußerer Ring ausgebildet ist, gegen den die Feder anliegt, wobei radial zwischen dem Ring und dem zweiten Ventilsitz und/oder dem Ring und der sphärisch oder kegelig geformten Umströmungsfläche ein oder mehrere Durchlassöffnungen ausgebildet sind, durch welche der Kraftstoffdampf von dem einen Ende des Durchflussbegrenzungselementes zum anderen Ende des Durchflussbegrenzungselement strömen kann. Der Ring dient des Weiteren als Anlagefläche für die Feder, so dass das Durchflussbegrenzungselement gleichmäßig über den Umfang in Richtung des Elektromagneten belastet wird.

In einer weiterführenden Ausführungsform ist am Strömungsgehäuseteil des zweiten Anschlusses ein Anschlag ausgebildet, gegen den das Durchflussbegrenzungselement in einem den Spalt zwischen der sphärisch oder kegelig geformten Umströmungsfläche des Durchflussbegrenzungselementes und der Innenfläche der Düse minimierenden Zustand anliegt. In dieser Position kann dennoch der Kraftstoffdampf über die Durchlassöffnungen und anschließend über den Spalt zwischen dem Durchflussbegrenzungselement und der Düse strömen, da dort ein Spalt verbleibt, über den ein definierter Durchsatz vom Tank zum Aktivkohlefilter gelangen kann, so dass eine Überlastung des Aktivkohlefilters verhindert wird.

Um das Durchflussbegrenzungselement daran zu hindern, dass eine radiale Verschiebung stattfindet, ist am Ring eine Axialnut ausgebildet, in die das am Ring anliegende Ende der Feder ragt, so dass das Durchflussbegrenzungselement in seiner radialen Position gehalten wird.

Am Ventilkörper ist vorzugsweise eine Durchlassöffnung ausgebildet, die radial innerhalb des zweiten Ventilsitzes mündet. Durch diese Durchlassöffnung kann der Druck aus dem Tank zur Öffnung des Durchflussbegrenzungselementes im Fall eines erhöhten Tankinnendruckes auf die innere Fläche des Durchflussbegrenzungselementes wirken.

Des Weiteren ist es vorteilhaft, wenn der Ventilkörper kardanisch an einer Ventilstange befestigt ist, die am Anker befestigt ist. Durch diese Form der Aufhängung kann der Ventilkörper geringfügig zum Anker gekippt werden, wodurch eine umfängliche und damit dichte Auflage des Ventilkörpers auf dem ersten Ventilsitz auch bei Montageungenauigkeiten oder geringen Ablagerungen gewährleistet wird.

Vorzugsweise weist der Ventilkörper ein Trägerelement auf, das an der Ventilstange befestigt ist und aus einem festen Werkstoff hergestellt ist und ein Dichtelement auf, mit dem der Ventilkörper auf die beiden Ventilsitze absenkbar ist und der aus einem elastischen Werkstoff hergestellt ist. Durch das Trägerelement wird eine ausreichende Steifigkeit auch im Bereich der Befestigung des Ventilkörpers an der Ventilstange sichergestellt und andererseits durch die Elastizität des Dichtelementes eine hohe Dichtigkeit bei der Auflage des Dichtelementes auf die beiden Ventilsitze gewährleistet.

In einer bevorzugten Weiterbildung der Erfindung ist ein Federelement zwischen dem Anker und einem Kern des Elektromagneten eingespannt. Dies hat den Vorteil, dass das Federelement nicht im direkt durchströmten Bereich angeordnet ist und im Kern eine gute Führung für die Feder vorliegt, so dass ein Abknicken zuverlässig vermieden wird.

In einer alternativen Ausbildung der Erfindung ist das Federelement zwischen dem Elektromagneten und dem Ventilkörper eingespannt und umgibt die Ventilstange, die somit ein Abknicken verhindert. Bei dieser Ausführung wird die Montage des Elektromagneten vereinfacht.

In einer hierzu weiterführenden Ausführungsform liegt das Federelement gegen eine radiale Erweiterung einer Gleitbuchse des Elektromagneten an, in der der Anker geführt ist, und über die der Elektromagnet gegenüber den Anschlüssen abgedichtet ist. So kann eine Schraubenfeder mit großem Durchmesser verwendet werden, welche gegen ein nicht magnetisierbares Element anliegt, so dass keine magnetischen Kräfte übertragen werden. Durch die Anordnung zwischen der Erweiterung der Gleitbuchse und dem Anker wird das Federelement radial in ihrer Bewegung eingeschränkt, so dass ein seitliches Verrutschen verhindert wird. Die Gleitbuchse sorgt einerseits für eine reibungsarme Bewegung des Ankers und andererseits schützt sie die Spule des Elektromagneten vor einem Eindringen der Kraftstoffdämpfe. Hierzu wird vorzugsweise noch eine Dichtung zwischen der Gleitbuchse und dem Außengehäuse des Elektromagneten angeordnet und zusätzlich die Gleitbuchse als an ihrem vom Ventilkörper abgewandten Ende topfförmig geschlossenes Bauteil ausgebildet.

Des Weiteren wird vorteilhafterweise die Feder zwischen dem Ring und einer Auflagefläche des Strömungsgehäuseteils des zweiten Anschlusses eingespannt. Diese Auflagefläche kann auch noch einen inneren ringförmigen Vorsprung aufweisen, der im Inneren die Düse bildet, wodurch auch die Feder an ihrem am Strömungsgehäuseteil aufliegenden Ende radial in ihrer Bewegungsfreiheit eingegrenzt ist.

Vorzugsweise sind der Anker des Elektromagneten, der Ventilkörper und das Durchflussbegrenzungselement axial hintereinander angeordnet und entlang einer gemeinsamen Achse verschiebbar. Damit wird der benötigte radiale Bauraum verringert. Zusätzlich sind alle Funktionen des Ventils durch Verschiebung entlang dieser Achse verwirklicht.

Es wird somit ein Kraftstoffdampfschalt- und -lüftungsventil geschaffen, mit dem aktiv eine Verbindung zwischen einem Aktivkohlefilter und einem Tank hergestellt oder geschlossen werden kann, wobei bei bestimmten Betriebspunkten, nämlich einem zu hohen Überdruck gegenüber Atmosphäre im Tank oder einem zu hohen Unterdruck gegenüber Atmosphäre im Tank eine Verbindung durch die vorhandenen Druckunterschiede hergestellt wird. Zusätzlich wird ein zu schnelles Abströmen von Kraftstoffdampf aus dem Tank und zum Aktivkohlefilter durch das erfindungsgemäße Durchflussregelelement verhindert, welches den Durchfluss für alle Drücke auf einen Maximaldurchfluss begrenzt, welcher einer vom Aktivkohlefilter zu absorbierenden beziehungsweise zu speichernden Kraftstoffdampfdurchfluss entspricht.

Ein Ausführungsbeispiel eines erfindungsgemäßen Kraftstoffdampfschalt- und -lüftungsventils für eine Verbrennungskraftmaschine, insbesondere zur Verwendung bei einem Hybridantrieb, ist in den Figuren dargestellt und wird nachfolgend beschrieben.
Figur 1 zeigt eine Seitenansicht eines erfindungsgemäßen Kraftstoffdampfschalt- und -lüftungsventils mit schematisch dargestellten angeschlossenen Komponenten.
Figur 2 zeigt eine Seitenansicht des erfindungsgemäßen Kraftstoffdampfschalt- und -lüftungsventils aus Figur 1 in geschnittener Darstellung.

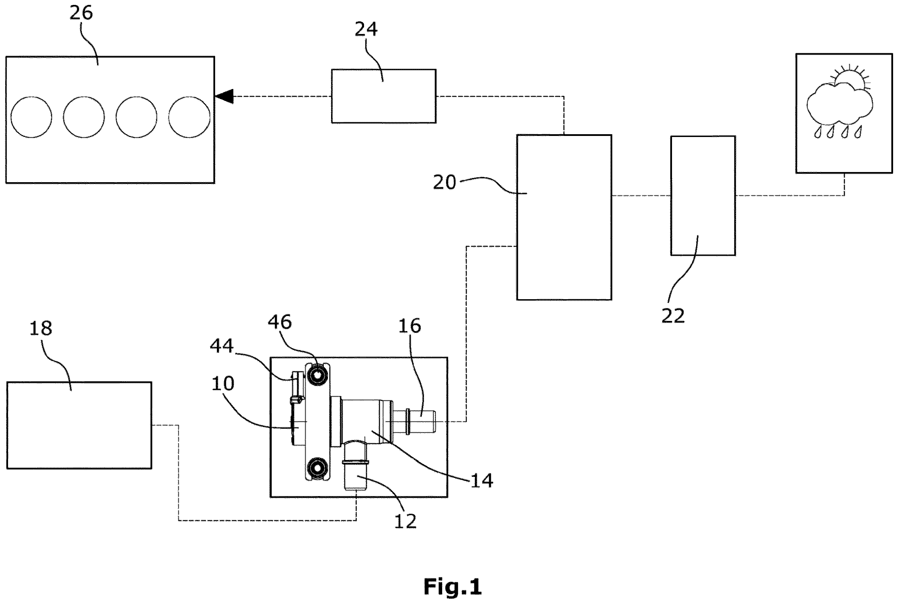

Wie in Figur 1 dargestellt ist, weist das erfindungsgemäße Kraftstoffdampfschalt- und -lüftungsventil 10 einen ersten Anschluss 12 auf, der seitlich aus einem Gehäuse 14 des Kraftstoffdampfschalt- und -lüftungsventils 10 ragt und einen zweiten axialen Anschluss 16 auf. Der erste, seitliche Anschluss 12 ist mit einem Kraftstofftank 18 verbunden, während der zweite axiale Anschluss 16 mit einem Aktivkohlefilter 20 verbunden ist. Vom Aktivkohlefilter 20 führt eine Leitung über ein Kraftstoffdampfauslassventil 22 zur Atmosphäre oder über eine zweite Leitung, in der ein Spülventil 24 angeordnet ist zu einer Verbrennungskraftmaschine 26, wo die Kraftstoffdämpfe der Verbrennung zugeführt werden können.

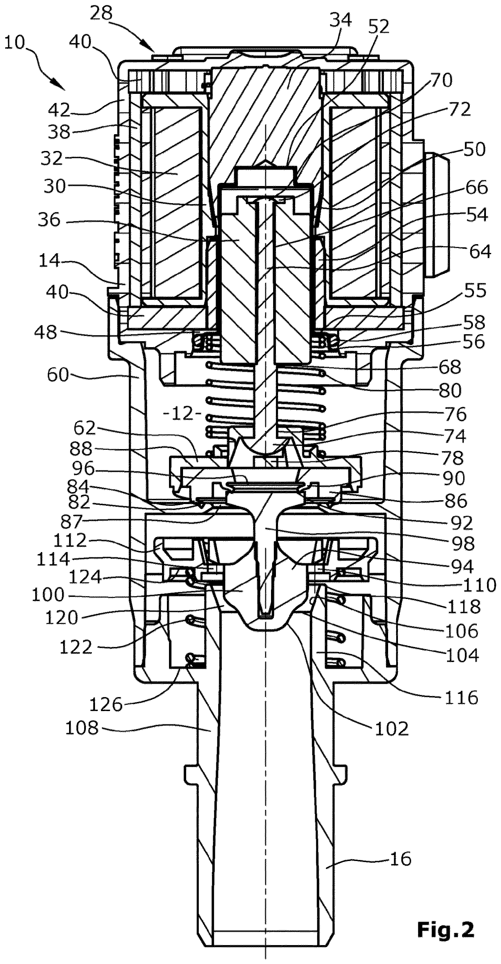

Der Aufbau des Kraftstoffdampfschalt- und -lüftungsventils 10 ist in Figur 2 zu erkennen. Es besteht aus einem Elektromagneten 28, der als Aktor dient und eine auf einen Spulenträger 30 gewickelte Spule 32, einen innenliegenden Kern 34, einen axial verschiebbaren Anker 36 sowie ein die Spule 32 radial umgebendes Joch 38 und jeweils ein an den axialen Enden des Spulenträgers 30 angeordnetes Rückschlussblech 40 aufweist, welche einen elektromagnetischen Kreis bilden. Dieser Elektromagnet 28 und insbesondere das Joch 38 ist zur Bildung eines Aktorgehäuseteils 42 des Gehäuses 14 mit einem Kunststoff umspritzt, welches auch einen Stecker 44 und Befestigungsaugen 46 ausbildet und am zum Kern entgegengesetzten Ende eine axiale Öffnung 48 aufweist, in die eine Gleitbuchse 50 eingeschoben ist, welche den Anker 36 führt. Diese Gleitbuchse 50 ist aus einem nicht magnetisierbaren Material und topfförmig ausgebildet, wobei der Boden 52 gegen den Kern 34 anliegt. Der Hauptführungsbereich der Gleitbuchse 50 ist von einer weichmagnetischen Buchse 54 umgeben, welche in das Rückschlussblech 40 und den Spulenträger 30 eingepresst ist. Die Gleitbuchse 50 weist eine radiale Erweiterung 55 auf, von der aus sich an ihrem offenen Ende ein erweiterter Bereich 56 erstreckt, der gegenüberliegend zu den die Öffnung 48 begrenzenden Wandflächen des Aktorgehäuseteils 42 angeordnet ist, wobei zwischen dem erweiterten Bereich 56 der Gleitbuchse 50 und der die Öffnung 48 begrenzende Wandfläche ein Dichtring 58 angeordnet ist, durch den ein Eindringen von Kraftstoffdampf in Richtung der Spule 32 verhindert wird. Am Aktorgehäuseteil 42 ist ein erstes Strömungsgehäuseteil 60 befestigt, welches den ersten Anschluss 12 ausbildet und in dem ein Ventilkörper 62 bewegbar ist, welcher mit dem Anker 36 gekoppelt ist, indem am Anker 36 eine Ventilstange 64 befestigt ist, an der der Ventilkörper 62 kardanisch befestigt ist. Die Befestigung der Ventilstange 64 am Anker 36 erfolgt, indem die Ventilstange 64 durch eine Durchgangsbohrung 66 im Anker 36 geschoben wird bis die Ventilstange mit einer Erweiterung 68 axial gegen das zum Ventilkörper 62 weisende Ende des Ankers 36 anliegt. In diesem Zustand ragt die Ventilstange 64 am entgegengesetzten Ende aus dem Anker 36 heraus und kann dort umgeformt werden, so dass eine Art Nietkopf 70 in einer kreisringförmigen Ausnehmung 72 an der zum Kern 34 weisenden Seite des Ankers 36 anliegt. An der entgegengesetzten Seite weist die Ventilstange 64 ebenfalls eine Art Nietkopf 74 auf, der in den Ventilkörper 62 ragt, so dass der Ventilkörper 62 ankerseitig gegen das flache Ende des Nietkopfes 74 anliegt, wozu am Ventilkörper 62 eine Öffnung 76 ausgebildet ist, deren Durchmesser im Wesentlichen dem Durchmesser der Ventilstange 64 entspricht. Die runde Seite des Nietkopfes 74 ist gegenüberliegend zu einem radial in das Innere des Ventilkörpers 62 ragenden Vorsprung 78 angeordnet, so dass der Ventilkörper 62 lediglich geringfügig axial relativ zur Ventilstange 64 beweglich ist.

Ein Federelement 80 spannt den Ventilkörper 62 einerseits gegen die flache Seite des Nietkopfes 74 vor und andererseits den Ventilkörper 62 mit dem Anker 36 gegen einen ersten Ventilsitz 82, der am ersten Strömungsgehäuseteil 60 ausgebildet ist, indem das Federelement 80 zwischen den Ventilkörper 62 und die Erweiterung 55 der Gleitbuchse 50 eingespannt wird.

Im geschlossenen Zustand liegt der Ventilkörper 62 mit einer ersten, radial äußeren Auflagefläche 84, die als Dichtlippe eines Dichtelementes 86 ausgebildet ist, gegen den ersten Ventilsitz 82 an, der eine Durchströmungsöffnung 87 umgibt. Das Dichtelement 86 besteht aus einem elastischen Material, insbesondere einem Elastomer und ist an einem Trägerelement 88 befestigt, über welches auch die Verbindung zur Ventilstange 64 besteht, so dass der Vorsprung 78 und die Öffnung 76 am Trägerelement 88 ausgebildet sind. Das Trägerelement 88 deckt das Dichtelement 86 in Richtung des Ankers 36 weitestgehend ab und umgibt dieses auch zumindest teilweise radial. Das Dichtelement 86 weist zusätzlich zur ersten Auflagefläche 84 noch eine weitere radial innerhalb der ersten Auflagefläche 84 platzierte, zweite Auflagefläche 90 auf, die ebenfalls als Dichtlippe ausgeführt ist und axial näher zum Anker 36 angeordnet ist als die erste Auflagefläche 84 und mit der das Dichtelement 86 auf einen zweiten Ventilsitz 92 absenkbar ist.

Dieser zweite Ventilsitz 92 ist axial bewegbar und erfindungsgemäß an einem Durchflussbegrenzungselement 94 ausgebildet, welches bei Auflage auf der zweiten Auflagefläche 90 eine radial innerhalb der zweiten Auflagefläche 90 ausgebildete Durchlassöffnung 96 am Dichtelement 86 und am Ventilkörper 62 verschließt.

Das Durchflussbegrenzungselement 94 ist zweiteilig ausgeführt und besteht aus einem Ventilsitzteil 98, an dem der zweite Ventilsitz 92 ausgebildet ist, und einem Regelkörper 100, in welchen sich ein stiftförmiges Teil des Ventilsitzteils 98 zur Befestigung des Regelkörpers 100 am Ventilsitzteil 98 erstreckt. Der Regelkörper 100 weist eine sphärisch geformte Umströmungsfläche 102 auf, welche mit einer Düse 104 korrespondiert, die an einer Innenfläche 106 eines zweiten Strömungsgehäuseteils 108 ausgebildet ist, welches am ersten Strömungsgehäuseteil 60 befestigt ist und den zweiten, axialen Anschluss 16 bildet.

Das Durchflussbegrenzungselement 94 weist Stege 110 auf, die sich vom Regelkörper 100 nach radial außen erstrecken und die Umströmungsfläche 102 mit einem radial äußeren Ring 112 verbinden. Entsprechend werden zwischen den Stegen 110 sowie zwischen der Umströmungsfläche 102 und dem Ring 112 mehrere Durchlassöffnungen 114 gebildet.

Das zweite Strömungsgehäuseteil 108 weist einen radial inneren, ringförmigen Vorsprung 116 auf, an dessen Innenseite die Düse 104 ausgebildet ist und dessen axiales Ende als Anschlag 118 für die Bewegung des Durchflussbegrenzungselementes 94 dient, welches bei Anliegen des Rings 112 am Anschlag 118 lediglich einen engen Spalt 120 zwischen der Umströmungsfläche 102 und der Düse 104 freigibt. Das Durchflussbegrenzungselement 94 wird mittels einer Feder 122, die zwischen einer Axialnut 124 des Ringes 112 und einer Auflagefläche 126 am zweiten Strömungsgehäuseteil 108 eingespannt ist, in Richtung des Ventilkörpers 62 und vom Anschlag 118 wegweisend belastet, so dass die Feder 122 den zweiten Ventilsitz 92 gegen den Ventilkörper 62 drückt und den Regelkörper 100 aus dem kleinsten Querschnitt der Düse 104 heraus belastet.

Die Funktion des Ventils ist nun so, dass im Normalzustand der Ventilkörper 62 auf dem ersten Ventilsitz 82 und dem zweiten Ventilsitz 92 aufliegt und somit keine Durchströmung zwischen den Anschlüssen 12, 16 vorliegt.

Steigt nun beispielsweise aufgrund von Erwärmung der Druck im Kraftstofftank 18 und damit am ersten Anschluss 12 auf beispielsweise über 0,3 bar Überdruck gegenüber Atmosphäre wird der zweite Ventilsitz 92 von der zweiten Auflagefläche 90 des Ventilkörpers 62 abgehoben, da bei diesem Druck die am Durchflussbegrenzungselement 94 aufgrund der Druckdifferenz wirkenden Kräfte größer sind als die Federkraft der Feder 122. Entsprechend strömt Kraftstoffdampf vom ersten Anschluss 12 über die Durchlassöffnung 96 am Ventilkörper 62 und die Durchströmungsöffnung 87 im Inneren des ersten Ventilsitzes 82 sowie durch die Durchlassöffnungen 114 zwischen den Stegen 110 und dem Spalt 120 zum zweiten Anschluss 16 und damit in Richtung des Aktivkohlefilters 20, so dass der Druck im Kraftstofftank 18 abgebaut wird. Bei sehr großen Drücken, die zu Volumenströmen führen würden, die nicht mehr vom Aktivkohlefilter 20 absorbiert werden können, tritt die Funktion des Durchflussbegrenzungselementes 94 in Kraft. Dieses wird bei sehr hohen Druckunterschieden bis gegen den Anschlag 118 verschoben. In dieser Position wird lediglich ein minimaler Spalt 120 zwischen dem Regelkörper 100 und der Düse 104 freigegeben, der einen maximalen Durchfluss zulässt, der dem maximal zulässigen Durchfluss des Aktivkohlefilters 20 von beispielsweise etwa 220 l/min entspricht. In den anderen Zuständen wird der Durchfluss durch den Spalt in Abhängigkeit der anliegenden Druckdifferenz geändert, also mit fallendem Druck ein größerer Durchströmungsquerschnitt zur Verfügung gestellt.

Fällt nun beispielweise aufgrund der Tankentleerung der Druck im Kraftstofftank 18 und damit am ersten Anschluss 12 auf beispielsweise unter -0,1 bar Unterdruck gegenüber Atmosphäre wird der Ventilkörper 62 vom ersten Ventilsitz 82 abgehoben, da bei diesem Druck die am Ventilkörper 62 aufgrund der Druckdifferenz wirkenden Kräfte größer sind als die Federkraft des Federelementes 80. Entsprechend strömt Luft vom zweiten Anschluss 16 durch den Spalt 120 zwischen dem Regelkörper 100 und der Düse 104 sowie durch die Durchströmungsöffnung 87 und radial zwischen dem Ventilkörper 62 und dem ersten Ventilsitz 82 zum ersten Anschluss 12, so dass ein Druckausgleich im Tank erfolgt. Das Durchflussbegrenzungselement 94 liegt in diesem Zustand weiter an der zweiten Auflagefläche 90 des Ventilkörpers 62 an, wird also durch die Feder 122 mit in Richtung des Elektromagneten 28 bewegt.

Des Weiteren ist es durch Bestromung des Elektromagneten 28 möglich, das Kraftstoffdampfschalt- und -lüftungsventil 10 aktiv zu betätigen. Dies erfolgt beispielsweise vor dem Einleiten des Tankvorgangs, um sicherzugehen, dass zu diesem Zeitpunkt keine Über- oder Unterdrücke im Tank 18 vorhanden sind. Dabei wird durch Abheben ein gleicher Zustand des Ventils 10 hergestellt, wie im Fall eines hohen Unterdrucks im Tank 18. Eine Strömung von Luft vom zweiten Anschluss 16 zum ersten Anschluss 12 ist ebenso möglich, wie eine Strömung von Kraftstoffdampf in umgekehrter Richtung, wobei hierbei die Funktion des Durchflussbegrenzungselementes 94 erhalten bleibt.

Es wird entsprechend ein Kraftstoffdampfschalt- und -lüftungsventil 10 geschaffen, welches zuverlässig sowohl Unter- als auch Überdrücke im Tank 18 abbauen kann und zusätzlich den Durchfluss des Kraftstoffdampfes auf einen maximal zulässigen Wert begrenzt. Auch eine aktive Schaltung ist möglich. Alle diese Funktionen werden in einem kleinbauenden Ventil mit einer minimalen Teileanzahl verwirklicht.

Es sollte deutlich sein, dass verschiedene Änderungen im Vergleich zum Ausführungsbeispiel möglich sind, ohne den Schutzbereich des Hauptanspruchs zu verlassen. Neben einer unterschiedlichen Ausführung der Gehäusetrennungen kann auch das Durchflussbegrenzungselement 94, der Elektromagnet 28 oder der Ventilkörper 62 anders ausgeführt werden. Die Schaltpunkte können mit den vorhandenen Federn je nach Anwendung individuell angepasst werden. Gleiches gilt für den maximal zulässigen Durchfluss, der durch konstruktive Änderung der Düse 104 und/oder des Durchflussbegrenzungselementes 94 angepasst werden kann.

## Patentansprüche

1. Kraftstoffdampfschalt- und -lüftungsventil (10) für eine Verbrennungskraftmaschine (26) mit
einem Elektromagneten (28),
einem ersten Anschluss (12) und einem zweiten Anschluss (16), einem Ventilkörper (62), der mit einem Anker (36) des Elektromagneten (28) gekoppelt ist und eine erste Auflagefläche (84) aufweist, mit der der Ventilkörper (62) auf den ersten Ventilsitz (82) absenkbar und vom ersten Ventilsitz (82) abhebbar ist, der zwischen dem ersten Anschluss (12) und dem zweiten Anschluss (16) angeordnet ist, und eine zweite Auflagefläche (90) aufweist, mit der der Ventilkörper (62) gegen einen zweiten Ventilsitz (92) bewegbar ist, der axial verschiebbar ist und über eine Feder (122) in Richtung zum Ventilkörper (62) belastet ist,
**dadurch gekennzeichnet, dass**
der zweite Ventilsitz (92) an einem Durchflussbegrenzungselement (94) angeordnet ist.

2. Kraftstoffdampfschalt- und -lüftungsventil (10) für eine Verbrennungskraftmaschine (26) nach Anspruch 1,
**dadurch gekennzeichnet, dass**
das Durchflussbegrenzungselement (94) einen Regelkörper (100) aufweist, der in eine Düse (104) bewegbar ist, die in einem Strömungsgehäuseteil (108) des zweiten Anschlusses (16) angeordnet ist, wobei die Feder (122) das Durchflussbegrenzungselement (94) in einer aus der Düse (104) heraus weisenden Richtung belastet.

3. Kraftstoffdampfschalt- und -lüftungsventil (10) für eine Verbrennungskraftmaschine (26) nach Anspruch 2,
**dadurch gekennzeichnet, dass**
das Durchflussbegrenzungselement (94) eine sphärisch oder kegelig geformte Umströmungsfläche (102) aufweist, die gegenüberliegend zu einer Innenfläche (106) der Düse (104) angeordnet ist.

4. Kraftstoffdampfschalt- und -lüftungsventil (10) für eine Verbrennungskraftmaschine (26) nach Anspruch 3,
**dadurch gekennzeichnet, dass**
am Durchflussbegrenzungselement (94) ein radial äußerer Ring (112) ausgebildet ist, gegen den die Feder (122) anliegt, wobei radial zwischen dem Ring (112) und dem zweiten Ventilsitz (92) und/oder dem Ring (112) und der sphärisch oder kegelig geformten Umströmungsfläche (102) ein oder mehrere Durchlassöffnungen (114) ausgebildet sind.

5. Kraftstoffdampfschalt- und -lüftungsventil (10) für eine Verbrennungskraftmaschine (26) nach einem der Ansprüche 3 oder 4, **dadurch gekennzeichnet, dass**
am Strömungsgehäuseteil (108) des zweiten Anschlusses (16) ein Anschlag (118) ausgebildet ist, gegen den das Durchflussbegrenzungselement (94) in einem den Spalt (120) zwischen der sphärisch oder kegelig geformten Umströmungsfläche (102) des Durchflussbegrenzungselementes (94) und der Innenfläche (106) der Düse (104) minimierenden Zustand anliegt.

6. Kraftstoffdampfschalt- und -lüftungsventil (10) für eine Verbrennungskraftmaschine (26) nach einem der Ansprüche 3 oder 4, **dadurch gekennzeichnet, dass**
am Ring (112) eine Axialnut (124) ausgebildet ist, in die das am Ring (112) anliegende Ende der Feder (122) ragt.

7. Kraftstoffdampfschalt- und -lüftungsventil (10) für eine Verbrennungskraftmaschine (26) nach einem der vorhergehenden Ansprüche,
**dadurch gekennzeichnet, dass**
am Ventilkörper (62) eine Durchlassöffnung (96) ausgebildet ist, die radial innerhalb des zweiten Ventilsitzes (92) mündet.

8. Kraftstoffdampfschalt- und -lüftungsventil (10) für eine Verbrennungskraftmaschine (26) nach einem der vorhergehenden Ansprüche,
**dadurch gekennzeichnet, dass**
der Ventilkörper (62) kardanisch an einer Ventilstange (64) befestigt ist, die am Anker (36) befestigt ist.

9. Kraftstoffdampfschalt- und -lüftungsventil (10) für eine Verbrennungskraftmaschine (26) nach einem der vorhergehenden Ansprüche,
**dadurch gekennzeichnet, dass**
der Ventilkörper (62) ein Trägerelement (88) aufweist, das an der Ventilstange (64) befestigt ist und aus einem festen Werkstoff hergestellt ist und ein Dichtelement (86) aufweist, mit dem der Ventilkörper (62) auf die beiden Ventilsitze (82, 92) absenkbar ist und der aus einem elastischen Werkstoff hergestellt ist.

10. Kraftstoffdampfschalt- und -lüftungsventil (10) für eine Verbrennungskraftmaschine (26) nach einem der vorhergehenden Ansprüche,
**dadurch gekennzeichnet, dass**
ein Federelement (80) zwischen dem Anker (36) und einem Kern (34) des Elektromagneten (28) eingespannt ist.

11. Kraftstoffdampfschalt- und -lüftungsventil (10) für eine Verbrennungskraftmaschine (26) nach einem der Ansprüche 8 oder 9, **dadurch gekennzeichnet, dass**
das Federelement (80) zwischen dem Elektromagneten (28) und dem Ventilkörper (62) eingespannt ist und die Ventilstange (64) umgibt.

12. Kraftstoffdampfschalt- und -lüftungsventil (10) für eine Verbrennungskraftmaschine (26) nach Anspruch 11,
**dadurch gekennzeichnet, dass**
das Federelement (80) gegen eine radiale Erweiterung (55) einer Gleitbuchse (50) des Elektromagneten (28) anliegt, in der der Anker (36) geführt ist, und über die der Elektromagnet (28) gegenüber den Anschlüssen (12, 16) abgedichtet ist.

13. Kraftstoffdampfschalt- und -lüftungsventil (10) für eine Verbrennungskraftmaschine (26) nach einem der vorhergehenden Ansprüche,
**dadurch gekennzeichnet, dass**
die Feder (122) zwischen dem Ring (112) und einer Auflagefläche (126) des Strömungsgehäuseteils (108) des zweiten Anschlusses (16) eingespannt ist.

14. Kraftstoffdampfschalt- und -lüftungsventil (10) für eine Verbrennungskraftmaschine (26) nach einem der vorhergehenden Ansprüche,
**dadurch gekennzeichnet, dass**
der Anker (36) des Elektromagneten (28), der Ventilkörper (62) und das Durchflussbegrenzungselement (94) axial hintereinander angeordnet sind und entlang einer gemeinsamen Achse verschiebbar sind.

## Claims

1. Fuel vapour switching and venting valve (10) for an internal combustion engine (26) with
an electromagnet (28),
a first port (12) and a second port (16),
a valve body (62) which is coupled to an armature (36) of the electromagnet (28) and comprises a first bearing surface (84) by means of which the valve body (62) can be lowered onto the first valve seat (82) and lifted off the first valve seat (82), which is arranged between the first port (12) and the second port (16), and a second bearing surface (90) with which the valve body (62) can be moved against a second valve seat (92) which is axially displaceable and is loaded in the direction of the valve body (62) via a spring (122),
**characterised in that**
the second valve seat (92) is arranged on a flow-limiting element (94).

2. Fuel vapour switching and venting valve (10) for an internal combustion engine (26) according to claim 1,
**characterised in that**
the flow-limiting element (94) comprises a control body (100) which is movable into a nozzle (104) arranged in a flow housing part (108) of the second port (16), wherein the spring (122) loads the flow-limiting element (94) in a direction pointing out of the nozzle (104).

3. Fuel vapour switching and venting valve (10) for an internal combustion engine (26) according to claim 2,
**characterised in that**
the flow-limiting element (94) comprises a spherically or conically shaped flow surface (102) which is arranged opposite an inner surface (106) of the nozzle (104).

4. Fuel vapour switching and venting valve (10) for an internal combustion engine (26) according to claim 3,
**characterised in that**
a radially outer ring (112) is configured on the flow-limiting element (94), against which the spring (122) bears, wherein one or more passage openings (114) are configured radially between the ring (112) and the second valve and/or the ring (112) and the spherically or conically shaped flow surface (102) are configured with one or more passage openings (114).

5. Fuel vapour switching and venting valve (10) for an internal combustion engine (26) according to one of claims 3 or 4,
**characterised in that**
a stop (118) is configured on the flow housing part (108) of the second port (16), against which the flow-limiting element (94) rests in a state minimising the gap (120) between the spherical or conical flow-around surface (102) of the flow-limiting element (94) and the inner surface (106) of the nozzle (104) in a state in which the gap (120) is minimised.

6. Fuel vapour switching and venting valve (10) for an internal combustion engine (26) according to one of claims 3 or 4,
**characterised in that**
an axial groove (124) is configured on the ring (112), into which the end of the spring (122) that is in contact with the ring (112) projects.

7. Fuel vapour switching and venting valve (10) for an internal combustion engine (26) according to one of the preceding claims,
**characterised in that**
a passage opening (96) is configured on the valve body (62), which leads radially within the second valve seat (92).

8. Fuel vapour switching and venting valve (10) for an internal combustion engine (26) according to one of the preceding claims,
**characterised in that**
the valve body (62) is attached cardanically to a valve rod (64) which is attached to the armature (36).

9. Fuel vapour switching and venting valve (10) for an internal combustion engine (26) according to one of the preceding claims,
**characterised in that**
the valve body (62) comprises a carrier element (88) which is attached to the valve rod (64) and is made of a solid material and comprises a sealing element (86) with which the valve body (62) can be lowered onto the two valve seats (82, 92) and which is made of an elastic material.

10. Fuel vapour switching and venting valve (10) for an internal combustion engine (26) according to one of the preceding claims,
**characterised in that**
a spring element (80) is clamped between the armature (36) and a core (34) of the electromagnet (28).

11. Fuel vapour switching and venting valve (10) for an internal combustion engine (26) according to one of claims 8 or 9,
**characterised in that**
the spring element (80) is clamped between the electromagnet (28) and the valve body (62) and surrounds the valve rod (64).

12. Fuel vapour switching and venting valve (10) for an internal combustion engine (26) according to claim 11,
**characterised in that**
the spring element (80) bears against a radial extension (55) of a sliding sleeve (50) of the electromagnet (28), in which the armature (36) is guided, and via which the electromagnet (28) is sealed with respect to the ports (12, 16).

13. Fuel vapour switching and venting valve (10) for an internal combustion engine (26) according to one of the preceding claims,
**characterised in that**
the spring (122) is clamped between the ring (112) and a bearing surface (126) of the flow housing part (108) of the second port (16).

14. Fuel vapour switching and venting valve (10) for an internal combustion engine (26) according to one of the preceding claims,
**characterised in that**
the armature (36) of the electromagnet (28), the valve body (62) and the flow-limiting element (94) are arranged axially one behind the other and are displaceable along a common axis.

## Revendications

1. Soupape de commutation et ventilation des vapeurs de carburant (10) pour un moteur à combustion interne (26), avec
un électroaimant (28),
un premier port (12) et un deuxième port (16),
un corps de vanne (62) qui est couplé à une armature (36) de l'électroaimant (28) et qui comprend une première surface d'appui (84) avec laquelle le corps de vanne (62) peut être abaissé sur le premier siège de vanne (82) et peut être soulevé du premier siège de vanne (82), qui est disposé entre le premier port (12) et le deuxième port (16), et comprend une deuxième surface d'appui (90) avec laquelle le corps de vanne (62) est déplaçable contre un deuxième siège de vanne (92) qui est déplaçable axialement et qui est sollicité par un ressort (122) en direction du corps de vanne (62),
**caractérisé en ce que**
le deuxième siège de vanne (92) est disposé sur un élément de limitation du flux (94).

2. Soupape de commutation et ventilation des vapeurs de carburant (10) pour un moteur à combustion interne (26) selon la revendication 1,
**caractérisé en ce que**
l'élément de limitation du flux (94) comprend un corps de régulation (100) déplaçable dans une buse (104) disposée dans une partie de logement d'écoulement (108) du deuxième port (16), le ressort (122) sollicitant l'élément de limitation du flux (94) dans une direction orientée vers l'extérieur de la buse (104).

3. Soupape de commutation et ventilation des vapeurs de carburant (10) pour un moteur à combustion interne (26) selon la revendication 2,
**caractérisé en ce que**
l'élément de limitation du flux (94) comprend une surface de contournement (102) de forme sphérique ou conique, disposée en regard d'une surface interne (106) de la buse (104).

4. Soupape de commutation et ventilation des vapeurs de carburant (10) pour un moteur à combustion interne (26) selon la revendication 3,
**caractérisé en ce que**
une bague (112) radialement extérieure est formée sur l'élément de limitation du flux (94), contre laquelle s'appuie le ressort (122), un ou plusieurs orifices de passage (114) étant formés radialement entre la bague (112) et le deuxième siège de vanne (92) et/ou la bague (112) et la surface d'écoulement (102) de forme sphérique ou conique.

5. Soupape de commutation et ventilation des vapeurs de carburant (10) pour un moteur à combustion interne (26) selon l'une des revendications 3 ou 4,
**caractérisé en ce que**
une butée (118) est formée sur la partie de carter d'écoulement (108) du deuxième port (16), contre laquelle l'élément de limitation du flux (94) est en butée dans un état minimisant l'espace (120) entre la surface d'écoulement (102) de forme sphérique ou conique de l'élément de limitation du flux (94) et la surface intérieure (106) de la buse (104).

6. Soupape de commutation et de ventilation des vapeurs de carburant (10) pour un moteur à combustion interne (26) selon l'une des revendications 3 ou 4,
**caractérisé en ce que**
une rainure axiale (124) est formée sur la bague (112), dans laquelle l'extrémité du ressort (122) en contact avec la bague (112) fait saillie.

7. Soupape de commutation et ventilation des vapeurs de carburant (10) pour un moteur à combustion interne (26) selon l'une des revendications précédentes,
**caractérisé en ce que**
un orifice de passage (96) est formé sur le corps de vanne (62) et débouche radialement à l'intérieur du deuxième siège de vanne (92).

8. Soupape de commutation et de ventilation des vapeurs de carburant (10) pour un moteur à combustion interne (26) selon l'une des revendications précédentes,
**caractérisé en ce que**
le corps de vanne (62) est monté de manière cardanique sur une tige de vanne (64) fixée à l'armature (36).

9. Soupape de commutation et ventilation des vapeurs de carburant (10) pour un moteur à combustion interne (26) selon l'une des revendications précédentes,
**caractérisé en ce que**
le corps de vanne (62) comprend un élément de support (88) qui est fixé à la tige de vanne (64) et qui est réalisé en un matériau solide et un élément d'étanchéité (86) avec lequel le corps de vanne (62) peut être abaissé sur les deux sièges de vanne (82, 92) et qui est réalisé en un matériau élastique.

10. Soupape de commutation et ventilation des vapeurs de carburant (10) pour un moteur à combustion interne (26) selon l'une des revendications précédentes,
**caractérisé en ce que**
un élément de suspension (80) est serré entre l'armature (36) et un noyau (34) de l'électroaimant (28).

11. Soupape de commutation et ventilation des vapeurs de carburant (10) pour un moteur à combustion interne (26) selon l'une des revendications 8 ou 9,
**caractérisé en ce que**
l'élément de suspension (80) est serré entre l'électroaimant (28) et le corps de vanne (62) et entoure la tige de vanne (64).

12. Soupape de commutation et ventilation des vapeurs de carburant (10) pour un moteur à combustion interne (26) selon la revendication 11,
**caractérisé en ce que**
l'élément de suspension (80) s'appuie contre un élargissement radial (55) d'une douille de glissement (50) de l'électroaimant (28), dans laquelle l'armature (36) est guidée, et par l'intermédiaire de laquelle l'électroaimant (28) est étanchéifié par rapport aux ports (12, 16).

13. Soupape de commutation et ventilation des vapeurs de carburant (10) pour un moteur à combustion interne (26) selon l'une des revendications précédentes,
**caractérisé en ce que**
le ressort (122) est serré entre la bague (112) et une surface d'appui (126) de la partie de carter d'écoulement (108) du deuxième port (16).

14. Soupape de commutation et ventilation des vapeurs de carburant (10) pour un moteur à combustion interne (26) selon l'une des revendications précédentes,
**caractérisé en ce que**
l'armature (36) de l'électroaimant (28), le corps de vanne (62) et l'élément de limitation du flux (94) sont disposés axialement les uns derrière les autres et peuvent être déplacés le long d'un axe commun.
